# EUROPEAN PATENT SPECIFICATION

(11) **EP 1 056 536 B1**
(45) Date of publication and mention of the grant of the patent: **05.06.2002**
(21) Application number: 99904960.4
(22) Date of filing: 19.02.1999
(51) Int. Cl.: B01J 2/10, C01G 43/025, B01F 7/02

(54) **APPARATUS FOR AGGLOMERATING OF PARTICLES**
VORRICHTUNG ZUM AGGLOMERIEREN VON PARTIKELN
APPAREIL POUR AGGLOMERER DES PARTICULES

(30) Priority: 26.02.1998 GB 9804044
(43) Date of publication of application: 06.12.2000
(73) Proprietor: British Nuclear Fuels PLC, Carrington, Cheshire WA3 6AS (GB)
(72) Inventor: BURNS, Paula, Joanne, Seascale, Cumbria CA20 1PG (GB); RICHARDSON, Alan, Norman, Warrington, Cheshire WA3 6AS (GB)
(74) Representative: Pawlyn, Anthony Neil
(86) International application number: GB9900344
(87) International publication number: WO9943423

(56) References cited:
- EP-A- 0 331 311
- DE-A- 2 240 227
- US-A- 2 118 616
- US-A- 3 150 862

## Description

This invention concerns improvements in and relating to agglomeration of particles, particularly but not exclusively for producing nuclear fuel materials.

Nuclear fuel materials are generally produced in the form of powders with closely controlled properties which are formed into pellets by pressing and sintering. As a precursor to pelletising it is known to agglomerate or spheroidise the powder to an extent.

It is known from EP-B-0331311 to employ a vertically mounted disc shaped chamber in which a bow-tie or axe-head shaped blade is provided. It is known from EP-A-0521214 to provide a multi-bladed stirrer and pelletiser at the bottom of a chamber with a substantial head space clear of the blades.

This and other prior art systems face a number of problems, however. In particular the rate at which the process can achieve the desired degree of spheroidising is limited and inconsistencies in powder distribution can occur within the spheroidiser if it is not very evenly loaded, leading to impaired product forms.

The present invention aims to provide apparatus and a method in which the spheroidising process is faster, more efficient, more consistent and easier to operate.

According to a first aspect of the invention we provide agglomerating apparatus comprising a housing defining a chamber, the chamber having an inlet, the chamber being provided with a rotatable blade having an axis of rotation, the blade including a plurality of arms which divide the chamber into a number of chamber portions, one or more passages being provided connecting one or more chamber portions to one or more other chamber portions, the arms being configured to occupy substantially all of the edge volume of the chamber at some stage during a revolution of the blade, the edge volume extending for the full axial width of the chamber and at least 2% of the distance from the edge wall of the chamber towards the axis.

Preferably the passages are at least in part defined by and/or provided in the arms.

Preferably at least three arms, and more preferably at least four arms are provided. The arms may be at least twice as long radially as their maximum width.

The blade may have a volume less than 30% of the volume of the chamber.

Other features, possibilities and options for the first aspect of the invention include the following features.

The edge volume may extend for at least 5%, at least 10% or even at least 15% of the distance from the edge wall of the chamber towards the axis of rotation of the blade.

Most preferably the arms are configured to occupy substantially all the chamber volume at some stage during a revolution of the blade.

The passage(s) may be provided between a side face of an arm and the side face of the chamber. The passages) for one arm may be provided between a different side of the one arm and the chamber than between a different arm and the chamber. Preferably the passage(s) are provided on alternating sides for alternating arms.

Preferably the separation between side face of an arm and the opposing side face of the chamber is between 5% and 75% of the separation between the two side walls of the chamber. A separation of between 5% and 50%, and more preferably of between 15% and 35% may be provided.

Preferably the separation is constant throughout the length of the passage, radially and/or circumferentially.

The passage(s) may extend over more than half, and preferably over at least 70% of the distance between the axis of rotation of the blade and the perimeter of the chamber.

In a particular embodiment, the passage(s) may extend over 100% of the distance from the outside of the hub to the perimeter of the chamber.

In an alternative embodiment of the invention, one or more of the arms may have one or more portions which extend across substantially the entire axial width of the chamber. Preferably the full width portion is provided at the radial end of one or more of the arms.

The passage(s) may be provided through one or more of the arms.

The volume of the blade is preferably less than 25% of the volume of the chamber, more preferably less than 20% of the volume of the chamber and still more preferably less than 18% of the volume of the chamber. A blade having a volume less than 15% of the chamber and ideally 12% or less than the volume of the chamber may be provided.

The blade volume may be taken to include the hub and blade arms. The chamber volume may be taken to include the volume of the chamber within which the blade is provided, including any volume present in the inlet and outlet on the processing side of the inlet and / outlet closing means.

Preferably the chamber is a right cylinder with an axis corresponding to the rotational axis of the blade. Preferably one, ideally both, of the axis are provided substantially horizontal. Substantially horizontal may be taken to be less than 20° to the horizontal, less than 10° or even less than 5°.

The chamber may be provided with flat end walls and a curved edge wall.

The blade arms may be wider, measured in the direction of rotation, at their ends than at an intermediate location. Preferably the minimum width of the arm is between 25% and 50% of the maximum width of the arm. The minimum width of the arm may be provided at the mid-point of the arm length. The maximum width of the arm may be provided adjacent to its end and/or adjacent to the mounting end.

The arms may be provided with concave surfaces facing the chamber. The facing and / or trailing sides may be so provided. The concave surfaces may be defined by a radius, in one or more cases. Preferably the radii is the same as that defining the chamber perimeter.

Preferably the blade is provided in the form of a Maltese cross.

The arms may be mounted on a hub. The hub may be cylindrical.

The arms may have an arcuate surface opposing the edge wall of the chamber, potentially of substantially equivalent profile. Preferably the arms have a planar surface opposing the edge wall of the chamber. Preferably the lead edge of the arm, defined by the direction of rotation, is provided with a lower separation between the end of the arm and the chamber wall than the trailing edge.

The inlet for the chamber is preferably provided in the edge wall of the chamber. The inlet is preferably provided in the highest point of the chamber.

The outlet for the chamber is preferably provided in the edge wall of the chamber. The outlet is preferably provided in the lowest point of the chamber. The outlet may be sealable, most preferably with a closure having an inner surface flush and continuous with the edge wall of the chamber.

The inlet may be provided directly above the outlet.

The chamber portions may be provided as generally triangular segments, the walls of the segments being defined by curves, most preferably of the same radii.

The apparatus or methods of the invention may be used to agglomerate UO₂ and/or PuO₂. Fuel additives and/or processing additives, such as agglomeration aids, lubricants and the like may be provided.

According to a fourth aspect of the invention we provide a method of agglomerating material, including feeding material to, and removing agglomerated material from, the apparatus according to the first and/or second and/or third aspects of the invention.

Most preferably the method provides for the passage of through substantially the entire edge volume, and most preferably the entire volume, of the chamber of one or more arms during a revolution of the blade. The edge volume may be defined as extending for the full axial width of the chamber and at least 2% of the distance from the edge wall of the chamber towards the axis. The edge volume may extend for at least 5%, at least 10% or even at least 15% of the distance from the edge wall of the chamber towards the axis of rotation of the blade.

This aspect may include the features, options, possibilities and structures set out elsewhere in this application, including method steps suitable for their implementation.

Various embodiments of the invention will now be described, by way of example only, and with reference to the accompanying drawings in which :-
Figure 1 illustrates a prior art spheroidiser apparatus;
Figure 2 illustrate a spheroidiser according to one embodiment of the present invention;
Figure 3 is an isometric view of the blade of the spheroidiser of Figure 2;
Figure 4 illustrates a detail of the hub to blade junction for the spheroidiser of Figure 2; and
Figure 5 details the material exit from the spheroidiser.

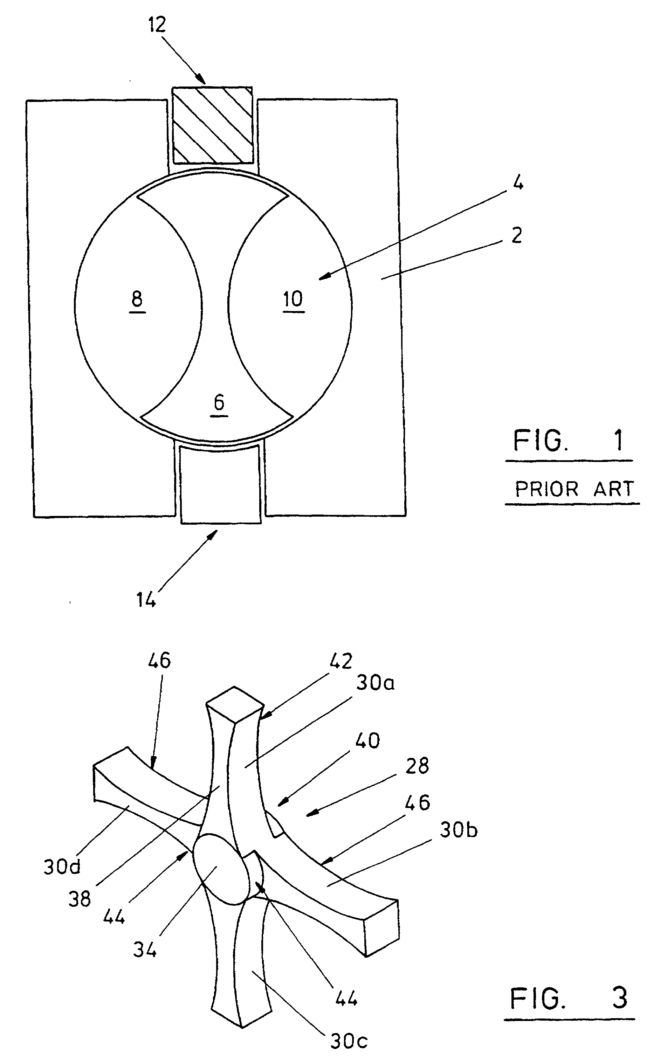

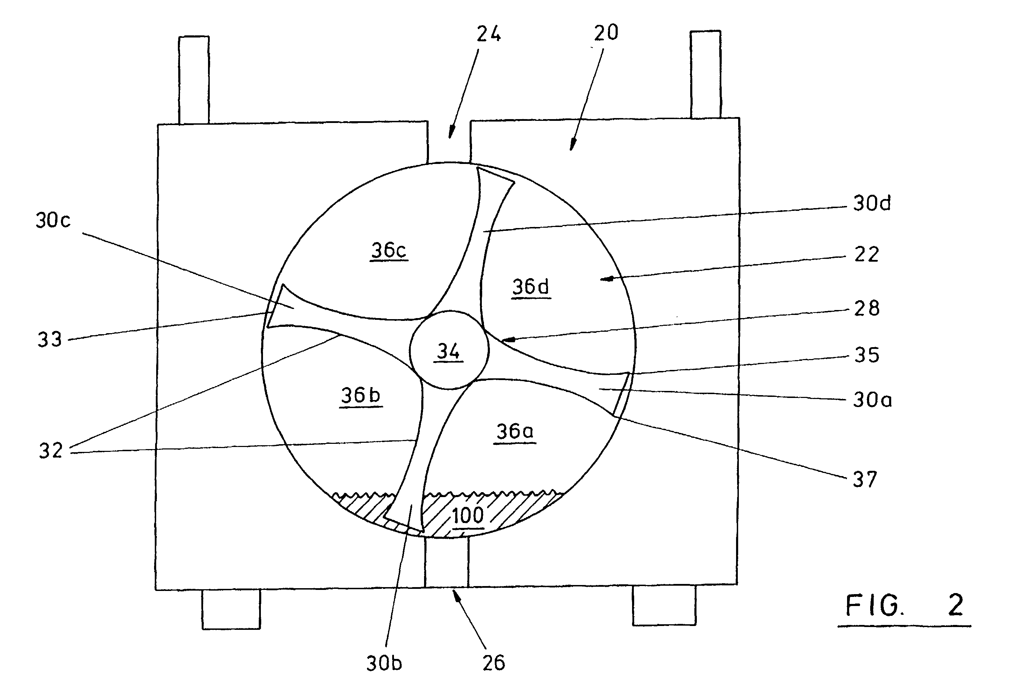

The prior art spheroidiser of Figure 1 consists of a body 2 which defines a disc shaped internal space 4 in which the processing occurs. The space 4 is provided with a pivotally mounted blade 6 having the general configuration of a bow-tie or axe-head. The thickness of the blade 6, into the page as shown, equates to the depth of the disc space 4, with a close tolerance between the two; the tolerance excludes material being processed.

Material to be processed is introduced into the two chambers 8, 10 separately and the inlet 12 is closed. The blade 6 is then rotated for the necessary time period and the processed material is then extracted through outlet 14 for on going processing.

The design of the spheroidiser, however, means that precautions and great care have to be taken to avoid any discrepancies between the load levels and/or the materials loaded into the respective chambers 8, 10. Failure to take such measures may embody itself in the material contained in one chamber having been spheroidised whereas the material in the other is still not finished. This would result in delay whilst that material is finished and impair the properties of the ready chamber material as that material is then over spheroidised.

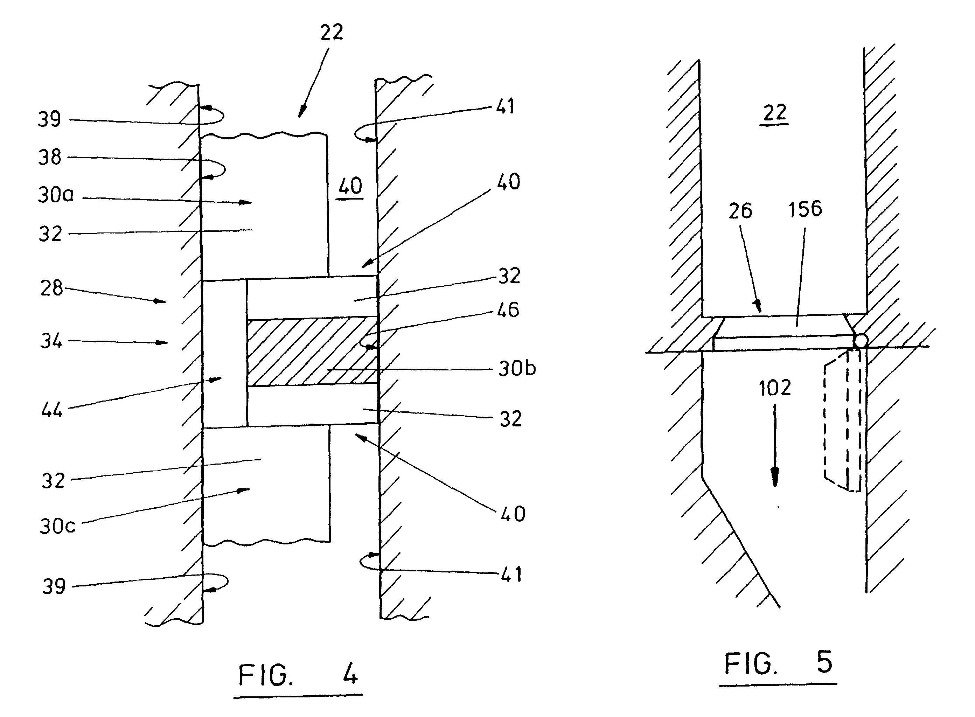

The spheroidiser of the present invention is embodied by the structure illustrated in Figure 2. Once again the body 20 defines a disc shaped space 22 with its axis mounted at 90° to the vertical. Material is fed in through inlet 24 and is removed after processing through outlet 26.

The blade 28 is very different in profile to the prior art blade, however. The blade 28 has the general profile of a Maltese cross, with four arms 30a, 30b, 30c and 30d, each of which is scooped out to define a curved surface 32 on each side of the arm. The curved surface 32 enhances the speed of spheroidising and is defined by a radius equivalent to that defining the disc chamber 22.

The arms 30 end in a surface 33 presenting a planar surface to the curve of the disc wall and are provided with a tolerance to closely fit that curve. The tolerance is lower at the leading edge 35, with an increased gap at the trailing edge 37; a scrapping action is thus provided.

The arms 30 are mounted on a central hub 34 which is pivotally mounted through the body 20 to drive means. The arms define four equivalent sized chambers 36a, 36b, 36c, 36d.

When provided in this way the mass of the blade 28 is low, thus only a low power for the drive motor is needed. The volume of the working chambers 36 is also increased and the volume occupied by the blade 28 reduced when compared with the prior art. This enhances the rate at which spheroidising is achieved due to the increased tumbling volume. A rate four times that of the axe-head spheroidiser can be achieved.

As can be seen in Figure 4 and the isometric view of Figure 3, the arms 30 on the blade 28 do not extend across the full depth of the disc space 22, comparable to the extent of the hub 34.

Arm 30a is provided such that its face 38 is substantially flush with the front wall 39 of the disc space 22, but is spaced from the rear face 41 of the disc space 22 such that a significant gap 40 is present between the rear face 41 and the face 42 of the arm 30a.

The arms 30b and 30d, see Figure 3, which are next to arm 30a around the perimeter of blade 28 are similarly spaced. In this case, as illustrated in Figure 4 with reference to arm 30b, the gap 44 is presented to the front face 39 of the disc space 22 and with the rear face 46 of the arm flush with the rear face 41 of the disc space 22.

Arm 30c is provided in an equivalent manner to arm 30a.

In each case the gap 40, 44, is approximately a quarter of the front face 39 to rear face 41 distance of disc space 22, see Figure 4.

The gaps 40, 44 offer many benefits to the process. Due to transfer of material through the gaps even distribution of the load is achieved, no matter how unevenly the material is introduced. Particularly during the early stages the transfer of material through the gaps also provides for thorough mixing of materials in each of the chambers 36 with one another. This achieves a more homogeneous product in terms of materials introduced on loading and additives introduced part way through the spheroidising process.

Improved spheroidising and improved lubricant distribution also result in less material being held up within the apparatus at the end of the process. This reduction is particularly beneficial in the nuclear industry where highly stringent accounting of the locations of material must be provided and where the possibility of material from one batch entering another must be minimised.

The provision of the gaps on opposing sides of the chamber has significant advantages too in terms of the effectiveness of the spheroidising. This configuration facilitates the transfer of material between chambers but also ensures that all of the chamber volume is active in terms of the processing material. Material lying on the bottom of the chamber which is passed by one arm, due to the gap in that arm, is invariably swept by the next arm around. Ensuring all the material is processed, there being no dead spaces in the chamber, again reduces hold-up as all the material is spheroidised evenly.

In processing material the blade 28 is initially rotated and the full amount of the fuel material 100, pre-homogenised UO₂ and PuO₂, and the lubricant to be processed is introduced into the space 22 under gravity.

Once loaded the blade 28 is run at the spheroidising speed and is kept at that rotational speed until spheroidising reaches the desired extent. The same blade speed is then used at the end of the process during discharge.

To facilitate discharge through outlet 26, Figure 5, the outlet 26 is sealed by a flap valve 156 which hinges down to allow material 102 to fall from the disc space 22 under the influence of gravity. The hinge is aligned perpendicular to the axis of rotation.

The process can then be repeated for further batches of material. The term spheroidising should not be taken as referring to the production of only spherical granules a variety of other shapes may be sought and achieved, for instance through agglomeration of the feed material.

The entire assembly is provided within a glove box environment due to the nature of the materials being handled. For maintenance purposes the front plate of the body 20 can be removed to allow access to the space 22 and the blade 28. The same removal unit can also, having stored away the front face of the body, be used to remove the blade 28 from the apparatus for repair or replacement.

The invention in its various forms and embodiments offers a system which is particularly advantageous in the manufacture of nuclear fuels, but which is also applicable to other industries and processes involving the processing of powders too.

## Claims

1. Agglomerating apparatus comprising a housing (20) defining a chamber (22), the chamber having an inlet (24), the chamber being provided with a rotatable blade (28) having an axis of rotation, the blade including a plurality of arms (30) which divide the chamber into a number of chamber portions (36), one or more passages (44) being provided connecting one or more chamber portions to one or more other chamber portions, the arms being configured to occupy substantially all of the edge volume of the chamber at some stage during a revolution of the blade, the edge volume extending for the full axial width of the chamber and at least 2% of the distance from the edge wall towards the axis.

2. Apparatus according to claim 1 in which the arms (30) are configured to occupy substantially all the chamber volume at some stage during a revolution of the blade (28).

3. Apparatus according to claim 1 or claim 2 in which the passage(s) are provided between a side face (42) of an arm and the side face (41) of the chamber (22).

4. Apparatus according to claim 3 in which the passage(s) for one arm (30a, 30c) are provided between a different side of the one arm (30a, 30c) and the chamber (22) than between a different arm (30b, 30d) and the chamber.

5. Apparatus according to claim 4 in which the passage(s) are provided on alternating sides for alternating arms.

6. Apparatus according to any of claims 3 to 5 in which the separation between side face (42) of an arm (30a) and the opposing side face (41) of the chamber (22) is between 5% and 75% of the separation between the two side walls (39, 41) of the chamber.

7. Apparatus according to any preceding claim in which the passage(s) extend over at least 70% of the distance between the axis of rotation of the blade (28) and the perimeter of the chamber (22).

8. Apparatus according to any previous claim in which the volume of the blade (28) being less than 30% the volume of the chamber (22).

9. Apparatus according to claim 8 in which the volume of the blade (20) is less than 18% of the volume of the chamber (22).

10. Apparatus according to any previous claim in which the blade (20) comprises three or more arms, the arms being at least twice as long radially as their maximum width.

11. Apparatus according to claim 10 in which the blade arms (30) are wider at their ends than at an intermediate location.

12. Apparatus according to claim 10 or claim 11 in which the minimum width of the arm (30) is between 25% and 50% of the maximum width of the arm (30).

13. Apparatus according to claim 12 in which the minimum width of the arm (30) is provided at the mid-point of the arm length, between its end (33) and the hub (34).

14. Apparatus according to claim 12 or claim 13 in which the maximum width of the arm (30) is provided adjacent to its end (33) and/or adjacent to the hub (34).

15. Apparatus according to any preceding claim in which the blade (28) is provided in the form of a Maltese cross.

16. A method of agglomerating material, including feeding material to, and removing agglomerated material from, the apparatus of any of claims 1 to 15.

17. The method of claim 16 in which the material agglomerated is UO₂ and/or PuO₂, with or without agglomeration aids and/or lubricants.

## Patentansprüche

1. Vorrichtung zum Agglomerieren von Partikeln mit einem Gehäuse (20), welches eine Kammer (22) begrenzt, die einen Einlaß (24) aufweist, wobei in der Kammer ein Flügelrotor (28) angeordnet ist, für den eine Drehachse vorgegeben ist und der eine Mehrzahl von Armen (30) aufweist, durch welche die Kammer in eine Anzahl von Kammerabschnitten (36) unterteilt wird, wobei ein oder mehrere Durchgänge (44) vorgesehen sind, welche einen oder mehrere Kammerabschnitte mit einem oder mehreren Kammerabschnitten verbinden und so gestaltet sind, daß sie zu irgend einem Zeitpunkt einer vollständigen Umdrehung des Flügelrotors jeden Teil des Kantenvolumens erreichen, und wobei das Kantenvolumen sich über die volle axiale Breite der Kammer erstreckt und zu mindestens zwei Prozent des Abstands von der Kantenwand zu der Achse hin erstreckt.

2. Vorrichtung nach Anspruch 1, bei welcher die Arme (30) so gestaltet sind, daß sie zu irgend einem Punkt einer vollständigen Umdrehung des Flügelrotors jeden Teil des Kammervolumens erreichen.

3. Vorrichtung nach Anspruch 1 oder 2, bei welcher der Durchgang bzw. die Durchgänge (44) zwischen einer Seitenfläche (42) eines Arms und der Seitenfläche (41) der Kammer (22) liegen.

4. Vorrichtung nach Anspruch 3, bei welcher der Durchgang bzw. die Durchgänge für einen Arm zwischen einer anderen Seite dieses einen Arms (30a, 30c) und der Kammer (22) vorgesehen sind, als zwischen einem anderen Arm (30b, 30d) und der Kammer.

5. Vorrichtung nach Anspruch 4, bei welcher der Durchgang bzw. die Durchgänge für abwechselnd aufeinanderfolgende Arme auf abwechselnden Seiten dieser Arme vorgesehen sind.

6. Vorrichtung nach einem der Ansprüche 3 bis 5, bei welcher der Abstand zwischen der Seitenfläche (42) eines Arms (30a) und der gegenüberliegenden Seitenfläche (41) der Kammer (22) zwischen 5 % und 75 % des Abstands zwischen den beiden Seitenflächen (39, 41) der Kammer beträgt.

7. Vorrichtung nach einem der vorhergehenden Ansprüche, bei welcher sich der Durchgang bzw. die Durchgänge über mindestens 70 % des Abstands zwischen der Drehachse des Flügelrotors (28) und dem Umfang der Kammer (22) erstrecken.

8. Vorrichtung nach einem der vorhergehenden Ansprüche, bei welcher das Volumen des Flügelrotors weniger als 30 % des Volumens der Kammer (22) beträgt.

9. Vorrichtung nach Anspruch 8, bei welcher das Volumen des Flügelrotors (28) kleiner ist als 18 % des Volumens der Kammer (22).

10. Vorrichtung nach einem der vorhergehenden Ansprüche, bei welcher der Flügelrotor (28) drei oder mehr Arme aufweist, wobei die Arme in radialer Richtung mindestens zweimal so lang sind als ihrer maximalen Breite entspricht.

11. Vorrichtung nach Anspruch 10, bei welcher die Arme (30) des Flügelrotors an ihren Enden breiter sind als an einer mittleren Stelle.

12. Vorrichtung nach Anspruch 10 oder 11, bei welcher die minimale Breite des Arms (30) zwischen 25 % und 50 % der maximalen Breite des Arms (30) beträgt.

13. Vorrichtung nach Anspruch 12, bei welcher die minimale Breite des Arms (30) bei der Mitte der Längserstreckung des Arms zwischen seinem Ende (33) und der Nabe (34) liegt.

14. Vorrichtung nach Anspruch 12 oder 13, bei welcher die maximale Breite des Arms (30) in der Nachbarschaft seines Endes (33) und/oder in der Nachbarschaft der Nabe (34) liegt.

15. Vorrichtung nach einem der vorhergehenden Ansprüche, bei welcher der Flügelrotor (28) die Form eines Malteserkreuzes hat.

16. Verfahren zum Agglomerieren von Material, bei welchem Material einer Vorrichtung nach einem der Ansprüche 1 bis 15 zugeführt wird und agglomeriertes Material aus dieser Vorrichtung abgezogen wird.

17. Verfahren nach Anspruch 16, bei welchem das agglomerierte Material UO₂ und/oder PuO₂ mit oder ohne Agglomerationshilfsmittel und/oder Schmiermittel ist.

## Revendications

1. Appareil d'agglomération comprenant un boîtier (20) définissant une chambre (22), la chambre comportant une entrée (24), la chambre étant munie d'une lame rotative (28) ayant un axe de rotation, la lame comportant une pluralité de bras (30) qui divisent la chambre en un certain nombre de parties de chambre (36), un ou plusieurs passages (44) étant prévus reliant une ou plusieurs parties de chambre à une ou plusieurs autres parties de chambre, les bras étant configurés pour occuper sensiblement tout le volume de bord de la chambre à une certaine étape pendant une révolution de la lame, le volume de bord s'étendant sur toute la largeur axiale de la chambre et au moins à 2% de la distance de la paroi de bord vers l'axe.

2. Appareil selon la revendication 1, dans lequel les bras (30) sont configurés pour occuper sensiblement tout le volume de la chambre à une certaine étape pendant une révolution de la lame (28).

3. Appareil selon la revendication 1 ou la revendication 2, dans lequel le(s) passages(s) est(sont) prévu(s) entre une face latérale (42) d'un bras et la face latérale (41) de la chambre (22).

4. Appareil selon la revendication 3, dans lequel le(s) passages(s) pour un bras (30a, 30c) est(sont) prévu(s) entre une face différente du bras (30a, 30c) et la chambre (22) qu'entre un bras différent (30b, 30d) et la chambre.

5. Appareil selon la revendication 4, dans lequel le(s) passages(s) est(sont) prévu(s) sur des faces alternées pour des bras alternés.

6. Appareil selon l'une quelconque des revendications 3 à 5, dans lequel la séparation entre la face latérale (42) d'un bras (30a) et la face latérale opposée (41) de la chambre (22) est comprise entre 5% et 75% de la séparation entre les deux parois latérales (39, 41) de la chambre.

7. Appareil selon l'une quelconque des revendications précédentes, dans lequel le(s) passages(s) s'étend(ent) sur au moins 70% de la distance entre l'axe de rotation de la lame (28) et le périmètre de la chambre (22).

8. Appareil selon l'une quelconque des revendications précédentes, dans lequel le volume de la lame (28) est inférieur à 30% du volume de la chambre (22).

9. Appareil selon la revendication 8, dans lequel le volume de la lame (20) est inférieur à 18% du volume de la chambre (22).

10. Appareil selon l'une quelconque des revendications précédentes, dans lequel la lame (20) comprend trois bras ou davantage, les bras étant au moins deux fois plus longs radialement que leur largeur maximale.

11. Appareil selon la revendication 10, dans lequel les bras de la lame (30) sont plus larges à leurs extrémités qu'à un emplacement intermédiaire.

12. Appareil selon la revendication 10 ou la revendication 11, dans lequel la largeur minimale du bras (30) est comprise entre 25% et 50% de la largeur maximale du bras (30).

13. Appareil selon la revendication 12, dans lequel la largeur minimale du bras (30) est située au point médian de la longueur du bras, entre son extrémité (33) et le moyeu (34).

14. Appareil selon la revendication 12 ou la revendication 13, dans lequel la largeur maximale du bras (30) est prévue pour être adjacente à son extrémité (33) et/ou adjacente au moyeu (34).

15. Appareil selon l'une quelconque des revendications précédentes, dans lequel la lame (28) est prévue sous la forme d'une croix de Malte.

16. Procédé d'agglomération de matériaux, comportant la fourniture d'un matériau à l'appareil selon l'une quelconque des revendications 1 à 15, et le retrait du matériau aggloméré depuis cet appareil.

17. Procédé selon la revendication 16, dans lequel le matériau aggloméré est du UO₂ et/ou du PuO₂, avec ou sans aides d'agglomération et/ou lubrifiants.
